# EUROPEAN PATENT SPECIFICATION

(11) **EP 4 492 990 B1**
(45) Date of publication and mention of the grant of the patent: **04.11.2026**
(21) Application number: 23711081.2
(22) Date of filing: 15.03.2023
(51) Int. Cl.: A23L 29/10, A23L 29/20, A23L 29/262, A23L 33/115, A23L 33/185, A23L 33/21, A23L 33/22, A23L 33/24, C08L 1/02, D21H 11/18, A23D 7/015, A23L 27/60, A23D 7/005, A23D 7/01, C08L 91/00

(54) **SEMI-SOLID OIL-IN-WATER EMULSIFIED FOOD COMPOSITION COMPRISING CELLULOSE MICROFIBRILS**
HALBFESTE ÖL-IN-WASSER-EMULGIERTE NAHRUNGSMITTELZUSAMMENSETZUNG MIT CELLULOSE-MIKROFIBRILLEN
COMPOSITION ALIMENTAIRE ÉMULSIFIÉE HUILE-DANS-EAU SEMI-SOLIDE COMPRENANT DES MICROFIBRILLES DE CELLULOSE

(30) Priority: 17.03.2022 EP 22162642
(43) Date of publication of application: 22.01.2025
(73) Proprietor: Unilever IP Holdings B.V., 6708 WH Wageningen (NL)
(72) Inventor: ARNAUDOV, Luben, Nikolaev, 6708 WH Wageningen (NL); CUISSINAT, Celine, Brigitte, 6708 WH Wageningen (NL); REGISMOND, Sudarshi, Tanuja, Angelique, 6708 WH Wageningen (NL); RODRIGUEZ, Braulio, Andres, Macias, 6708 WH Wageningen (NL); VELIKOV, Krassimir, Petkov, 6708 WH Wageningen (NL)
(74) Representative: Unilever Patent Group
(86) International application number: PCT/EP2023/056655
(87) International publication number: WO 2023/175028

(56) References cited:
- WO-A1-2021/069205
- US-A1- 2005 089 621
- US-A1- 2007 172 572
- US-A1- 2009 148 585
- US-A1- 2016 295 875

## Description

The present invention relates to a semi-solid oil-in-water emulsion comprising from 3 to 65 wt% of vegetable oil, a process to prepare such a composition and the use of cellulose microfibrils (CMFs) as thickening system in oil-in-water emulsified food compositions comprising vegetable oils in an amount of from 3 to 65 wt%.

### Background

Semi-solid oil-in-water emulsified food compositions are well-known, for example as mayonnaise, mayonnaise-like alternatives and sandwich spreads. A traditional mayonnaise composition comprises a high amount of oil, for example about 75 wt% up to even 85 wt%. The oil is present in small droplets in a continuous water phase. The presence of an emulsifier, traditionally egg yolk, prevents the oil droplets from coalescing and consequently phase-separation of the oil and water phases. A traditional mayonnaise is a semi-solid product. Its viscosity originates from the very dense packing of the oil droplets.

Consumers demand products, including mayonnaise-like products, with a lower oil level, for example for health considerations. The industry is interested in products with a lower oil content for reasons of costs and sustainable use of natural resources. Because of the important role of a high oil content with regard to the consistency, it is technically challenging to reduce the oil content, while maintaining the appearance and experience of a "full-fat" equivalent (e.g. 78% oil) mayonnaise that the consumer associates with 'traditional mayonnaise'. For example, with a reduction in oil, the viscosity of the emulsion will drop, quickly resulting in the product becoming liquid. In addition to this, it was observed that in low oil (3-65 wt%) semi-solid oil in water emulsified food compositions a significant risk for syneresis occurs. Syneresis is the separation of water from the emulsion, forming a layer of water on top of the emulsion.

To reduce syneresis, oil in water emulsions, like mayonnaise-like products, with a lower oil level, for example branded as 'light products', normally comprise chemically modified starches, often in combination with gums. In such products, the chemically modified starch provides a matrix in the continuous water phase that prevents water from seeping out of the emulsion and forming a water layer on top of the emulsion.

A complication is that the use of chemically modified starches has for some groups of consumers a negative connotation, and is considered 'artificial', 'chemical' or even 'damaging our health'.

US 2005/089621 A discloses an edible emulsion with insoluble fiber thickener and a viscosity-building emulsifier. The edible emulsion is suitable for use as a base for making reduced oil food products.

US 2007/172572 A discloses an edible emulsion with insoluble fiber and a dairy base. The edible emulsion is suitable for use as a base for making reduced oil food products.

US 2009/148585 A discloses an edible emulsion with insoluble fiber. The edible emulsion is suitable for use as a base for making reduced oil food products. The reduced oil food products made with the edible emulsion having insoluble fiber have consumer acceptable viscosities and texture and sensorial properties consistent with full fat food products.

WO 2021/069205 A discloses a food composition in the form of an oil-in-water emulsion comprising water, a first acidulant selected from the group consisting of lactic acid, benzoic acid, acetic acid, sorbic acid and mixtures thereof, structurant, selected from the group consisting of starch, flour, gum, fiber and mixtures thereof, 5 to 60 wt percent of vegetable oil, non-soy plant protein having an average particle size of below 100 micrometers, and a second acidulant, having a pKa of 3.2 or lower, wherein the weight ratio between plant protein and vegetable oil is greater than or equal to 0.3, and wherein the pH of the composition is of between 2.5 and 4.5.

WO 2015/086223 A and US 2016/295875 A each disclose a method for preparation of a reduced-oil oil-in-water emulsion. The method requires a heating step of a dispersion of cellulosic fibers before being mixed with other ingredients of the emulsion. Either the dispersion of cellulosic fibres is homogenised in a high pressure homogeniser at relatively high pressure, or the final emulsion containing the dispersion of cellulosic fibres is homogenised in a high pressure homogeniser at relatively high pressure.

WO2019/048715A2 discloses the use of "expanded pectin-containing biomass composition", a source of CMFs, as a stabilizer for salad dressings and mayonnaise. The document shows the use of the expanded pectin-containing biomass composition in pourable (liquid-like) formulations such as salad dressings that are emulsifier-free or dairy and/or egg-based.

There remains a continuous need for improved semi-solid mid/low-oil oil-in-water emulsion and methods to manufacture them.

### Summary of the invention

Accordingly, the technical challenge therefore was to provide a spreadable (semi-solid) oil-in-water emulsified food product with a relatively low oil level, e.g. from 3 to 65 wt%, while providing the appearance and experience, in particular regarding absence of syneresis, as close as possible to traditional high-oil mayonnaise, or to an equivalent reduced-oil oil in water emulsion that comprises chemically modified starch to control syneresis. In particular, a composition is desired wherein syneresis is minimum, preferably not detectable after one month, and more preferably after three months of storage at ambient conditions. A stable composition is desired that is a semi-solid at room temperature, as known from a conventional high oil (78% oil) mayonnaise composition or from conventional low oil (<65% oil) mayonnaise or savoury spreads stabilized with chemically modified non-emulsifying starch. The composition is therefore semi-solid, the composition is not liquid at room temperature. The system of the invention preferably allows for greater control of syneresis.

Surprisingly, this challenge was met, at least in part, by a product according to the first aspect of the present invention.

In a first aspect, the invention relates to a food composition in the form of an oil-in-water emulsion, comprising:
- 3 to 65 wt% of vegetable oil,
- oil-in-water emulsifier,
- 0.1 to 6 wt% of cellulose microfibrils, wherein the average degree of crystallinity of the cellulose is below 50%, or wherein the cellulose microfibrils are bacterial cellulose microfibrils,

wherein the composition is free from chemically modified, non-emulsifying starch,
wherein the food composition has a composition homogeneity parameter (CHP) of at least 0.03.

In a second aspect, the invention relates to process
to manufacture an oil in water emulsified food composition comprising:
- A water phase comprising water and cellulose microfibrils,
- oil-in-water emulsifier,
- An oil phase,

The process comprising the steps of:
a) Providing a water phase comprising:
   - Water,
   - from 0.1 to 6 w%, based on the weight of the resulting food composition, of cellulose microfibrils, wherein the average degree of crystallinity of the cellulose is below 50%, or wherein the cellulose microfibrils are bacterial cellulose microfibrils,
b) Adding an oil-in-water emulsifier,
c) Combining an oil phase comprising vegetable oil with the water phase,
d) Dispersing the cellulose microfibrils sufficient that the resulting food composition has a CHP of at least 0.03,
e) Homogenizing the water phase, the emulsifier and the oil phase, to result in an oil-in-water emulsified food composition according to the invention.

In a third aspect, the invention relates to the use of from 0.1 to 6 wt% of cellulose microfibrils, wherein the average degree of crystallinity of the cellulose is below 50%, or wherein the cellulose microfibrils are bacterial cellulose microfibrils, to reduce syneresis in an oil-in-water emulsified food composition comprising from 3 to 65 wt% of vegetable oil and an emulsifier, and wherein the oil in water emulsion is free from chemically modified non-emulsifying starch and wherein the composition has a CHP of more than 0.03.

In a fourth aspect, the invention relates to the use of from 0.1 to 6 wt% of cellulose microfibrils, wherein the average degree of crystallinity of the cellulose is below 50%, or wherein the cellulose microfibrils are bacterial cellulose microfibrils, to improve the mouthfeel, preferably to reduce sticky or slimy mouthfeel, in an oil-in-water emulsified food composition comprising from 3 to 65 wt% of vegetable oil and an emulsifier, and wherein the oil in water emulsion is free from chemically modified non-emulsifying starch and wherein the composition has a CHP of more than 0.03 and wherein the composition preferably further comprises an additional hydrocolloid next to the cellulose microfibrils.

### Detailed description of the invention

All percentages, unless otherwise stated, refer to the percentage by weight (wt%).

"Weight ratio" means that the concentration (wt%) of a first (class of) compound(s) is divided by the concentration (wt%) of a second (class of) compound(s) and multiplied by 100 in order to arrive at a percentage.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

### Emulsion

The composition of the first aspect of the invention is in the form of an oil-in-water emulsion and the process of the second aspect of the invention results in an oil-in-water emulsified food composition. Examples of oil-in-water emulsions encompassed by the present invention include semi-solid emulsified sauces, such as mayonnaise, and mayonnaise-like emulsions, hummus, ljutenica, ajvar, aioli. Other semi-solid oil-in-water emulsified food composition include food concentrates in emulsified form which upon dilution with water (or aqueous products e.g. fruit or vegetable juices, vinegar, wine, etc.) give soups, sauces, or liquid dressing emulsions that can be in emulsified form. Preferably, the food composition is a mayonnaise or a mayonnaise-like product, such as a low-oil mayonnaise or egg-less mayonnaise.

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. However, in the present context, mayonnaise-like products having e.g. oil levels lower than defined in a standard of identity or not containing egg yolk are in the scope of the present invention. In the art, this kind of products may contain thickeners like starch to stabilise the aqueous phase. Mayonnaises and mayonnaise-like products may vary in colour, and are generally white, cream-coloured, or pale yellow. The texture may range from light creamy to thick. Generally, mayonnaise and mayonnaise-like products are semi-solid. Mayonnaises in the context of the present invention do not necessarily need to conform to a standard of identity in any country.

In a first aspect, the invention relates to a new low-oil emulsified food composition wherein texture is provided with a new texturing system, not relying on chemically modified starch, while providing a semi-solid, non-liquid (not pourable), consistency. Level of syneresis, mouthfeel and taste are preferably as close as possible to a full fat (78 wt%) equivalent emulsion without the present texturing system.

### Oil

The oil-in-water emulsified food composition according to the invention is preferably a plant-based composition suitable for consumers that appreciate vegan products. Accordingly, the composition comprises vegetable oil. Vegetable oil is preferably present in an amount of from 3 to 65 wt%, preferably 10 to 60 wt%, preferably of from 15 to 55 wt%, even more preferably of from 20 to 50 wt%, based on the weight of the food composition. Animal derived fat, such as milkfat or butter is preferably absent from the composition.

Vegetable oil is known in the art, and includes oils derived from e.g. plants, such as from for example nuts or seeds from plants. In the context of this invention, 'vegetable oil' also includes oil from algae. Preferred oils for use in the context of this invention are vegetable oils which are liquid at 20 °C, preferably, which are liquid at 5°C. Preferably the oil comprises an oil selected from the group consisting of sunflower oil, rapeseed oil, olive oil, soybean oil, and combinations of these oils. Most preferred, the oil is soybean oil or rapeseed oil.

### Water

The composition of the invention comprises water. The total amount of water in the composition is preferably of from 35 to 96 wt%, preferably of from 45 to 90 wt%, based on the weight of the composition. "Total amount of water" includes water originating from water-containing ingredients.

### Emulsifier

The composition of the invention is an oil-in-water emulsion. It comprises an oil-in-water emulsifier. The emulsifier is preferably present in an amount of from 0.1 to 15 wt%, preferably 0.1 to 12 wt%, even more preferably of from 0.3 to 5 wt%, based on the weight of the oil-in-water emulsion. The emulsifier serves to stably disperse oil droplets in the continuous aqueous phase of an oil-in-water emulsion. The emulsifier preferably has a hydrophilic-lipophilic balance (HLB) of from 8 to 15, more preferably of from 10 to 14 and even more preferably of from 11 to 13. The Hydrophilic-Lipophilic Balance (HLB) of an emulsifier is a measure of the degree to which it is hydrophilic or lipophilic. The HLB value is a parameter which is describing the solubility of the surfactant. The HLB value is described by Griffin in 1950 as a measure of the hydrophilicity or lipophilicity of nonionic surfactants. It can be determined experimentally by the phenol titration method of Marszall; see "Parfumerie, Kosmetik", Vol. 60, 1979, pp. 444-448; and Rompp, Chemistry Lexicon, 8th Edition 1983, p. 1750.

Preferably the emulsifier comprises, more preferably is an oil-in-water emulsifier originating from egg, preferably from egg yolk. Preferably the composition comprises egg yolk, more preferably is egg yolk. This suitably serves as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for the oil droplets. The egg yolk may be used native, or part of the egg yolk in the composition of the invention may have been subjected to an enzymatic conversion process using phospholipase. Preferably the phospholipase that is used to treat egg yolk is phospholipase A2. This process leads to split off of fatty acid chains from the phospholipid molecules, and yields so-called enzyme-modified egg yolk. The emulsifier accordingly may comprise egg yolk in native of enzyme-modified form.

Preferably the concentration of egg yolk in the composition of the invention ranges from 1% to 10% by weight of the composition, more preferred from 2% to 8% by weight of the composition, even more preferably from 2.5% to 6% by weight of the composition. The egg yolk may be added as egg yolk component. Alternatively, the composition may also contain whole egg, containing both egg white and egg yolk. The total amount of egg yolk in the composition of the invention includes egg yolk that may be present as part of whole egg. Preferably the concentration of phospholipids, preferably originating from egg yolk, ranges from 0.08% to 0.8% by weight, preferably from 0.2% to 0.5% by weight of the food composition.

Alternatively, or in addition to the egg-derived emulsifier, the composition of the invention may comprise an emulsifier that does not originate from egg or egg yolk. Such non-egg derived emulsifier may be derived from dairy, such as preferably whey protein or casein. It can also be preferred that the emulsifier is a plant-based emulsifier, such as a plant protein. Preferably plant protein is present in the composition in an amount of from 0.3 to 5 wt%, based on the weight of the composition. Preferably, the amount of plant protein is of between 0.5 and 2.5 wt%, preferably of between 0.7 and 1.5 wt%, based on the weight of the composition.

More preferably, the emulsifier is selected from the group consisting of phospholipid, whey protein, casein, algae protein, legume protein, OSA starch and mixtures thereof. Even more preferably, the emulsifier is selected from the group consisting of pea protein, chickpea protein, lentil protein, egg yolk and mixtures thereof. It may be preferred that the emulsifier is not plant-derived. It may be preferred that the emulsifier is not a botanical emulsifier. Most preferably, the emulsifier comprises egg yolk.

### Cellulose microfibrils

The composition of the invention comprises cellulose microfibrils. Cellulose microfibrils is a term known in the art (e.g. Chinga-Carrasco, Nanoscale Research Letters, 2011, 6:417), and are different from cellulose fibers, such as for example present in wood, which consist of linear assemblies of cellulose microfibrils and have diameter of several micrometers. Cellulose microfibrils are not chemically modified. The cellulose microfibrils are insoluble in water. They are preferably not oxidized.

It was found in the present invention, that the beneficial effects in semi-solid low oil emulsified food compositions of the invention rely on the specific amount of cellulose microfibril and their ultra-fine distribution level in the composition reflected in the composition homogeneity parameter (CHP). In this regard, the composition according to the invention comprises 0.1 to 6 wt-% of cellulose microfibrils (dry wt. fibrils on wt. of composition). Preferably, the amount of cellulose microfibrils in the composition according to the invention is from 0.1 to 4 wt%, more preferably from 0.3 to 2.5 wt%, even more preferably from 0.5 to 2.0 wt% and even more preferably from 0.7 to 1.5 wt%. The amount of CMF in the water phase of the composition is preferably of from 0.3 to 3 wt%, preferably of from 0.5 to 2.5 wt% and most preferably of from 1 to 2 wt%, based on the weight of the water phase.

The cellulose microfibrils are typically present in the composition in the form of single fibrils or as aggregates with a cross section of a few tens of nanometres to a few hundreds of nanometers. Cellulose microfibrils are preferably present in aggregates, preferably at least 80 wt% of the CMF is present in the form of aggregates. The aggregates have preferably a cross section of from 3 to 100 nanometer, preferably of from 3 to 50 nanometers. This is measured over its longest diameter, as can be seen for example by electron microscopy, as known in the art.

Preferably, the average length of the cellulose microfibrils is more than 1 micrometer and preferably more than 5 micrometers. Preferably, at least 80 wt% of the microfibrils is smaller than 50 nm in diameter. Preferably at least 80 wt% of the microfibrils is smaller than 40 nm in diameter, more preferably smaller than 30 nm, even more preferably smaller than 20 nm and still more preferably smaller than 10 nm. The microfibril diameter can be suitably determined using the methods such as transmission electron microscopy, scanning electron microscopy or atomic force microscopy, as known in the art.

The cellulose microfibrils in the present invention are cellulose microfibrils with an average degree of crystallinity of below 50%. Depending on the source of the microfibrils, the cellulose in the microfibrils in the compositions of the present invention have a different degree of crystallinity. Preferably the average degree of crystallinity of the cellulose in the microfibrils is less than 40%, more preferably less than 35% and even more preferably less than 30%. The table below shows the average degree of crystallinity of typical sources of cellulose microfibrils.

**Table 1: Average degree of crystallinity of cellulose (all polymorph cellulose I)**

| **Source** | **Average degree of crystallinity (%)** |
|---|---|
| Tomato fibers | 32 |
| Citrus fiber (Citrus Fiber AQ+N) | 29 |
| Nata de Coco | 74 |
| Cotton | 72 |
| Wood pulp fiber (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane Fiber (Ultracel) | 49 |

The average degree of crystallinity can be suitably determined according to the method described in the method section below.

### Sources of cellulose microfibrils

The composition of the present invention preferably comprises sources of cellulose microfibrils such as insoluble dietary fibres (these are preferably derived from plants where the main component is cellulose; Dhingra D, Michael M, Rajput H, Patil RT. Dietary fibre in foods: a review. J Food Sci Technol. 2012;49(3):255-266. doi:10.1007/s13197-011-0365-5), fruit and vegetable purees or pastes, algae, or bacterial cellulose. The source of cellulose microfibrils can be sourced from commercial suppliers, e.g. Herbafood, CP Kelco citrus fibre or prepared as known to the artisan.,
Preferably, the cellulose microfibrils are cellulose microfibrils derived from the primary cell wall material of plants. Primary cell wall material are the strongly self-associated fibrous structures typically found in plant cell walls. In the native plant tissue, they are conventionally present in the form of aggregates with a cross section of a few tens of nanometres to a few hundreds of nanometers. These aggregates consist of the elementary microfibrils. These primary cell wall material cellulose microfibrils are well-known. A typical primary cell wall material cellulose microfibril generally comprises about 36 aligned beta-1-4-glucose polymer chains.

The cellulose microfibrils are typically plant parenchymal microfibrils that are suitably obtained from the primary cell wall material prepared from the parenchyma of plants. Even more preferably, the cellulose microfibrils are plant parenchymal cellulose microfibrils.

Plant parenchymal tissue typically has a degree of crystallinity of less than 50 wt%.

The source of the plant parenchyma cells may be any plant that contains plant parenchyma cells having a cellulose skeleton. A plant cell wall typically contains cellulose and hemicellulose, pectin and in many cases lignin. This contrasts with the cell walls of fungi (which are made of chitin), and of bacteria, which are made of peptidoglycan. In the present invention, the composition comprises edible cellulose microfibrils. The cellulose microfibrils are preferably derived from parenchymal tissue. They are for example not wood derived cellulose fibers. Accordingly, the cellulose microfibrils used in the composition according to the invention therefore have a lignin content that is less than 10 wt% calculated on total amount of microfibrils, respectively, but preferably less than 2%, and most preferably consist essentially of non-lignified tissue, as understood by the skilled person in the area of plant biology.

Preferably the cellulose microfibrils are selected from the group consisting of cellulose microfibrils from fruits, roots, bulbs, tubers, seeds, leaves and combinations thereof; more preferably are selected from the group consisting of cellulose microfibrils from citrus fruit, tomato fruit, peach fruit, pumpkin fruit, kiwi fruit, apple fruit, mango fruit, sugar beet, beet root, turnip, parsnip, maize, oat, wheat, peas and combinations thereof; and even more preferably are selected from the group consisting of cellulose microfibrils from citrus fruit, tomato fruit, mango fruit, and combinations thereof. Most preferably the cellulose microfibrils are citrus cellulose microfibrils.

To obtain cellulose microfibrils, plant primary cell wall material may optionally have undergone several pre-treatment steps, as known in the art. Such pre-treatments include but are not limited to heating, cooking, washing, refining and depectinating.

As known in the art, cellulose microfibrils are suitably obtained from the plant cell wall material by removing soluble and unbound sugars, protein, polysaccharides, oils, waxes and phytochemicals (e.g. carotenoids, lycopene). This is suitably achieved using well known techniques including cutting up the cell wall material, cooking, washing, centrifugation, decanting and drying as is well-known to the skilled person.

Plant cell walls, especially in parenchymal tissue, contain hemicelluloses and pectin in addition to cellulose. Thus, the source of cellulose microfibrils may typically comprise cellulose, hemicellulose, and pectin. The hemicellulose may be present for example in an amount of 0 to 40 wt%. Preferably the cellulose microfibrils comprise hemicelluloses, preferably in an amount of up to 40 wt%, like for example from 5 to 40 wt%, and more preferably in an amount from 10 to 30 wt%.

### CHP

The cellulose microfibrils are dispersed in the composition of the invention. The degree of homogeneity of dispersion in the composition of the present invention provides the surprising properties to the product. The degree of dispersion of the cellulose microfibrils in the composition of the invention is expressed as the composition homogeneity parameter (CHP). Accordingly, the composition of the present invention has a CHP of at least 0.03. The emulsified food composition preferably has a composition homogeneity parameter CHP of at least 0.04 and still more preferably at least 0.05. Preferably, the emulsified food composition has a CHP of at most 0.20, more preferably at most 0.15, and even more preferably at most 0.10. The CHP is preferably from 0.03 to 0.20, more preferably from 0.04 to 0.15 and most preferably from 0.05 to 0.10.

### Additional hydrocolloid

It may be preferred, that the composition of the present invention comprises at least one additional hydrocolloid (*i.e.* in addition to the cellulose microfibrils). The composition however does not contain as additional hydrocolloid chemically modified, non-emulsifying starch. OSA modified starch can be used as emulsifier. The composition is preferably free from chemically modified starch not being OSA modified starch. The further hydrocolloid is not required to obtain the desired reduction in syneresis. It may be considered beneficial for example to reduce syneresis of water from the product upon longer term storage of the product and/or fine tuning of the product texture.

The further hydrocolloid, i.e. besides the cellulose microfibrils, preferably is selected from the group consisting of inulin, fructooligosaccharides, galacto-oligosaccharides, xylooligosaccharides, husks, brans such as preferably mustard bran, psyllium, polysaccharides, physically modified starch, native starch, polycarbophil, lignin, araomogaiactans, chytosans, oat fiber, soluble corn fiber, dextrin, dextran, locust bean gum, konjac gum, derivatives of locust bean gum, pectin, gums, gellan gum, xanthan gum, guar gum, pectin, carrageenan, cellulose gum, gum arabic, plant mucilage or mixtures thereof.

The further hydrocolloid is preferably selected from the group of native starch, physically modified starch, xanthan gum, guar gum and plant mucilage. More preferably, the further hydrocolloid is selected from the group consisting of native starch, physically modified starch guar gum, xanthan gum and plant mucilage. Even more preferably, the additional hydrocolloid is selected from the group consisting of non-modified starch, physically modified starch, xanthan gum and guar gum.

As an advantage of the present invention, it was observed that the organoleptic (mouthfeel) problems as observed in low-oil oil-in water emulsions that use hydrocolloid but wherein the cellulose microfibers are not present, were not present anymore (i.e. such mouthfeel problems were not present in the case that the further hydrocolloid is present and they were not present in the case the further hydrocolloid is not present). It was found in the context of the invention, that the negative attribute of starch, such as a slimy or sticky mouthfeel, is avoided by the presence of the cellulose microfibrils in the present invention. Further, low-oil oil in water emulsified compositions of the prior art that use native starch, e.g. as texturiser, show significant syneresis, whereas in the present context, a composition with CMF and a CHP of more than 0.03, do not show syneresis and native starch can be present, for example to block syneresis even further as might be desired e.g. in cases of for long term storage. The sticky or slimy mouthfeel associated with physically modified starch or gums, such as xanthan or guar gum, in the art, is not observed in the context where the cellulose microfibrils are used.

It was found that with the combination of cellulose microfibril and a second hydrocolloid such as preferably native starch, physically modified starch, gum or mucilage, a low-oil (3-65 wt%) emulsified composition could be obtained that showed a consistency that resembled that of full fat (e.g. 78wt% oil) emulsions, in terms of color (white or off-white like in mayonnaise), and mouthfeel (it didn't have a grainy or sticky mouthfeel). The production process is preferably efficient. The syneresis is preferably as close as possible to that of full-fat equivalent emulsions, or an equivalent product using chemically modified starch, i.e. the amount of liquid released due to syneresis, collected in a time period of 5 days, is preferably less than 2 g, preferably less than 1.5 g, preferably less than 1 g, measured at any time of the shelf life, preferably as measured at one month of storage, more preferably when measured at 12 months of storage. Preferably, the level of syneresis collected in a period of a month is less than 2.5 g, preferably less than 2 g, preferably less than 1.5 g, measured at any time of the shelf life, preferably as measured at one month of storage, more preferably when measured at 12 months of storage.

Accordingly, the composition may comprise preferably native starch or physically modified starch in an amount of from 0.1 to 10 wt%, preferably of from 1 to 5 wt%, more preferably of from 2 to 4 wt%, based on the weight of the water phase. The water phase includes all water-soluble components in the composition and the water. Native starch is starch that is not modified chemically or physically. Native starch or physically modified starch is preferably selected from the group consisting of corn starch, potato starch, tapioca starch, rice starch, wheat starch, pea starch and mixtures thereof. Preferably the non-modified starch or physically modified starch is corn starch, potato starch, wheat starch, or rice starch. Even more preferably the non-modified starch or physically modified starch is waxy corn starch, waxy potato starch, waxy wheat starch, or waxy rice starch, most preferably the non-modified starch or physically modified starch is waxy corn or waxy rice starch. Native starch may preferably be added in the form of starch or flour.

The weight ratio of CMF to the total of native starch and physically modified starch in the present invention is preferably of from 1: 0.1 to 1: 50, preferably of from 1: 0.5 to 1: 6, to provide the optimal texturing and syneresis-suppressing effect in low-oil plant-based emulsions according to the invention.

The ratio of the total of native starch and physically modified starch to oil is preferably of from 1:1 to 1:500, preferably of from 1:2 to 1:100, even more preferably of from 1:10 to 1:70.

The composition may comprise a source of plant mucilage as second hydrocoloid. Plant mucilage is Mucilage is a thick, gluey substance produced by nearly all plants and some microorganisms. It is a polar glycoprotein and an exopolysaccharide. Mucilage in plants plays a role in the storage of water and food, seed germination, and thickening membranes. Sources of mucilage in the present invention are Aloe vera, Basella alba (Malabar spinach), Cactus, Chondrus crispus (Irish moss), Corchorus (jute plant), Dioscorea polystachya (nagaimo, Chinese yam), Drosera (sundews), Drosophyllum lusitanicum, Fenugreek, Flax seeds, Kelp, Liquorice root, Marshmallow, Mallow, Mullein, Mustard bran, Okra, Parthenium, Pinguicula (butterwort), Psyllium seed husks, Salvia hispanica (chia) seed, Talinum triangulare (waterleaf), Ulmus rubra bark (slippery elm), Plantago major (greater plantain). Preferably the mucilage is mucilage selected from the group consisting of mustard- , chia-, and flax seeds.

Mucilage is preferably present in an amount of from 0 to 5 wt%, more preferably, if present, in an amount of from 0.2 to 5 wt%, even more preferably 0.6 to 3 wt%, most preferably in an amount of from 0.8 to 2 wt%, based on the weight of the composition.

The weight ratio of parenchymal CMF to plant mucilage in the present invention is preferably of from 1: 0.05 to 1: 20, preferably of from 1: 0.5 to 1: 5, to provide the optimal texturing and syneresis-suppressing effect in low-oil plant-based emulsions according to the invention.

The composition of the invention may preferably contain gums. Gums are traditionally known to provide an undesired mouthfeel, like sliminess to emulsified food compositions of the invention. It was found in the context of the invention, that the negative attribute, slimy or sticky mouthfeel is avoided by the presence of the cellulose microfibrils. Gum may be present in an amount of from 0.1 to 5 wt%, preferably of from 0.2 to 3 wt%, based on the weight of the water phase. The composition may alternatively however also preferred to be free from gums.

It can be alternatively preferred that the composition of the invention is free from a further hydrocolloid, *i.e.* further than the cellulose microfibrils as used in the present invention. It may be preferred alternatively that native starch or physically modified starch is absent from the composition. It may be preferred that the composition is free from plant mucilage, native starch, physically modified starch, xanthan gum or guar gum. It maybe preferred that the composition is free from plant mucilage. It may be preferred, that the composition is free from one of the group consisting of xanthan gum, guar gum, locust bean gum, carrageenan gum and mixtures thereof. It may be preferred that the composition is free from xanthan gum and guar gum. It may be preferred, that the composition is free form xanthan gum.

The composition is preferably free from other thickening compositions that may affect the visual, textural or organoleptic quality of the oil in water emulsified foo composition. The composition of the invention preferably resembles as much as possible a full-fat equivalent oil in water emulsified composition, preferably a mayonnaise. The composition comprises edible ingredients only. The composition therefore does preferably not contain wood pulp, wood fibers, or microcrystalline cellulose. The total hydrocolloid in the composition consists preferably of the sources of CMF and of the optional additional hydrocolloid selected from native starch, physically modified starch, plant mucilage, gum and mixtures thereof. Apart from the features vegetable oil, emulsifier, CMF, salt, sugar, acidulant and the optional further hydrocolloid, it contains preferably no other non-mustard plant-derived ingredients. Mustard may be present in the composition of the invention. Tomato puree is an ingredient that is often used to provide texture to food compositions, but this is not a desired option in the oil in water emulsions of the invention, because of the impact on the color of compositions of the invention, especially on the color of preferred compositions that aim to resemble mayonnaise compositions. Tomato paste is preferably absent from the composition.

### Acid and pH

The composition of the invention preferably has a pH ranging from 2.5 to 7.5, preferably ranging from 3.5 to 6.5, preferably ranging from 3.5 to 4.5.

Preferably the composition of the invention has a total titratable acidity ranging from 0.03% to 3% by weight expressed as acetic acid, preferably from 0.05% to 2% by weight, preferably from 0.1% to 1% by weight.

Accordingly, the composition of the invention preferably comprises acidulant. Acidulant is preferably selected from the group consisting of acetic acid, citric acid, lactic acid, sorbic acid and mixtures thereof. The composition preferably comprises acetic acid. Acetic acid is preferably present in an amount of more than 50 wt%, more preferably more than 80 wt%, even more preferably more than 90 wt%, even more preferably more than 95 wt% based on the weight of the total amount of acid in the composition. The acetic acid may typically be added in the form of vinegar. Hence, the composition preferably comprises vinegar.

### Other ingredients

It may be preferred, that the composition of the invention contains additionally other ingredients than already specifically mentioned in here. For example, it may be preferred, that the composition contains plant material in the form of herbs and/or spices. In case such ingredients are present in the composition, then generally their total concentration is at least 0.1% by weight, and preferably maximally 10% by weight, preferably maximally 5% by weight.

The composition of the invention may comprise sugar. High levels are not desired. Sugar may be present in an amount of from 0.1 to 15 wt%, preferably of from 0.3 to 12 wt%, even more preferably of from 0.4 to 10 wt%, most preferably of from 0.5 to 8 wt%, based on the weight of the composition.

Total alkaline metal salt, preferably sodium chloride, may be present in an amount of from 0.1 to 5 wt%, preferably from 0.15 to 4 wt%, or more preferably of from 0.2 to 3 wt%, based on the weight of the composition.

The composition may comprise mustard, e.g. as a flavour compound. Mustard may be present for example in an amount of from 0.5 to 10 wt%, more preferably 1 to 9 wt%, even more preferably 2 to 8 wt%, even more preferably of from 3 to 7 wt%. Accordingly, it may be preferred that the food product of the invention comprises allyl isothiocyanate (AITC).

The composition of the invention is a semi-solid. Such is known typically from traditional mayonnaise compositions with high oil level (e.g. 78% oil). The rheological properties of the composition can be expressed in Stevens Value (in grams) and/or as elastic property. The Stevens Value (in grams), especially for mayonnaise and mayonnaise -like compositions, is preferably from 80 g to 400 g, preferably of from 80 g to 200 g, even more preferably 100 g to 200 g, or even 100 g to 150 g, as measured at 20 °C. This is preferably assessed some time, e.g. a week, or 2 weeks, after production, when products are stabilized and typically on the shelf. It is in particular in the area of higher consistency (80-400 grams Stevens), that the present invention shows the advantage regarding syneresis reduction while maintaining a smooth, non-sticky mouthfeel, as in liquid compositions this problem is not present, as the skilled person understands. The composition of the invention therefore preferably has a Stevens consistency of between 80 g and 400 g, more preferably of between 100 g and 200 g, and even more preferably of between 100 g and 150 g, as measured at 20 °C.

### Method of the invention

In a further aspect, the present invention relates to a process to manufacture a composition according to the first aspect of the invention.

In particular, the invention relates in a further aspect to a process to manufacture an oil in water emulsified food composition comprising:
- A water phase comprising water and cellulose microfibrils,
- An oil in water emulsifier,
- An oil phase,

The process comprising the steps of:
a) Providing a water phase comprising:
   - Water,
   - from 0.1 to 6 w%, based on the weight of the resulting food composition, of cellulose microfibrils, wherein the average degree of crystallinity of the cellulose is below 50%, or wherein the cellulose microfibrils are bacterial cellulose microfibrils,
b) adding an emulsifier,
c) combining an oil phase comprising vegetable oil with the water phase,
d) Dispersing the cellulose microfibrils sufficient that the resulting food composition has a CHP of at least 0.03,
e) Homogenizing the water phase, the emulsifier and the oil phase,
to result in an oil-in-water-emulsified food composition according to the invention.

### Step a

In step a) of the process of the invention a water phase is provided.

The water phase comprises water and, cellulose microfibrils. The water phase is preferably used in an amount of from 15 to 95 wt%, preferably in an amount of from 20 to 70 wt%, based on the weight of the resulting food composition.

The cellulose microfibrils are added in an amount of from 0.1 to 6 w%, based on the weight of the resulting food composition. Preferably, they are added in an amount of from 0.2 to 8 wt%, preferably 0.5 to 3 wt%, based on the weight of the water phase in step a). As described above, the cellulose microfibers are typically provided by a source of cellulose microfibers. The source of CMF is preferably commercially available (e.g. cellulose rich dietary fibers from Herbafoods, CP Kelco), or by preparation of such a source, e.g. bacterial or primary cell wall material that is preferably derived from parenchyma of plants.

It may be preferred, that in step a) the process includes a homogenization step wherein water is mixed with a source of cellulose microfibrils. As the skilled person appreciates, the source of cellulose microfibrils is added in an amount to provide preferably 0.1 to 6 wt%, preferably from 0.1 to 4 wt%, more preferably from 0.3 to 2.5 wt%, even more preferably from 0.5 to 2.0 wt% and even more preferably from 0.7 to 1.5 wt% of cellulose microfibrils in the resulting food composition. It may be preferred, that the source of cellulose microfibrils is added in step a) in an amount to provide from 0.2 to 8 wt%, preferably 0.5 to 5 wt%, of cellulose microfibrils based on the weight of the water phase in step a).

### Step b

The product resulting of the process of the invention is an oil-in-water emulsion, and therefore comprises an oil-in-water emulsifier. The emulsifier is preferably derived from egg yolk, dairy protein, plant protein, as known in the art, and egg yolk is most preferred.

The emulsifier can be added at several moments during preparation. The emulsifier is preferably added during or before homogenization step e). The emulsifier may be added during step a). It may be added during or before, preferably before addition of the vegetable oil in step c). It can be preferred, that the emulsifier is added to the water phase together with the cellulose micro fibrils or just after the cellulose microfibrils are added to the water. It is preferred, that the emulsifier is added to the water phase after addition of the cellulose microfibrils are added to the water, and before or during, preferably before, an optional homogenization of the water and the cellulose microfibrils in step a). In this situation, the emulsifier is mixed into the water phase essentially simultaneously with the cellulose microfibrils, preferably during a homogenization, in step a). Such an optional homogenization is typically carried out gently, low shear, e,g, with a conventional stirring device, and results in mixing of the ingredients in the water phase at step a).

The amount of emulsifier used in the present invention is described above in the context of the composition. It is preferred, that the emulsifier is added in an amount of from 0.1 to 15 wt% based on the weight of the resulting food composition.

It may be preferred to heat the water phase comprising water and cellulose microfibrils, before combination with the oil phase (before step c). Such heating may preferably be carried out before addition of the emulsifier. In this manner a further optimization of the effects of the invention could be achieved.

It is not essential though to use such a heating step, the CHP of higher than 0.03 as obtained in the composition of the invention provides the required texturing advantage. The production process is preferably efficient. If applied, heating is suitably carried out to a temperature of between 70 and 95 °C, preferably of between 75 and 90 °C, and most preferably of between 78 and 88 °C. Such a heating may preferably be carried out for a short moment, for example between 4 and 20 minutes, preferably 8 and 15 minutes. Higher temperatures are preferably combined with shorter time periods, as the skilled person will understand. Heating can be carried out before or after addition of the emulsifier (step b). It may be preferred that there is no heating of the water phase. In particular, it maybe preferred that there is no heating step of the water phase comprising cellulose microfibrils wherein the water phase does not contain starch, preferably does not contain native starch or physically modified starch. As indicated later, it may be desired to include heating of the water phase after addition of native starch or physically modified starch. However, it maybe preferred that there is no heating step in the manufacturing process of the invention.

### Step c)

In step c) an oil phase is combined with the water phase. The oil phase comprises vegetable oil. The oil phase is combined with the water phase during or before the homogenization step e), preferably before the homogenization step e).

### Step d and e

In step d) of the process the cellulose microfibrils are dispersed. The cellulose microfibrils are dispersed in the water phase, where they perform their texturing effect at CHP of more than 0.03 in the oil in water emulsified composition. Dispersion of the fibrils is caried out to lead to the CHP of more than 0.03. Dispersion of the microfibrils can be carried out at different stages of the manufacturing process. It may be preferred, that step d) is carried out before step c), i.e. before oil is added, or simultaneously with step e), or both before step c) and during step e).

In case step d) is carried out simultaneously with step e), i.e. as one step, the dispersion of the cellulose microfibrils is carried out during the homogenization of the water phase, the emulsifier and the oil phase, to result in an emulsified food composition. Effectively, this allows to manufacture the composition by combining the ingredients (step a, b, c) and homogenize them, during which dispersion of the cellulose microfibrils takes place (step d), to result in an oil in water emulsified food composition with a CHP of more than 0.03. The homogenization in this context then is carried out to provide the CHP of the resulting food composition of more than 0.03. As discussed above, homogenization is preferably carried out to CHP of higher than 0.03, preferably of at least 0.04 and still more preferably of at least 0.05 in the resulting emulsified food composition of the invention. Preferably, the emulsified food composition has a CHP of at most 0.20, more preferably at most 0.15, and even more preferably at most 0.10. The CHP is preferably from 0.03 to 0.20, more preferably from 0.04 to 0.15 and most preferably from 0.05 to 0.10.

Achieving this level of CHP during homogenization is known in the art, and the obtained level of CHP can conveniently be assessed e.g. by the method as provided below. It can be preferred, especially in this context, that the homogenization involves high pressure of for example more than 700 bar, or even more than 900 bar, or several rounds of homogenization at a lower pressure. Such can be carried out for example in a microfluidizer, such as for example from Microfluidics, USA, or high-pressure homogenizer, such as e.g. a Panda Plus (GEA Niro Soavi, GEA Denmark). It may be preferred, that a source of cellulose microfibrils (e.g. insoluble dietary fibers, fruit and vegetable paste, bacterial cellulose) is used that is pre-homogenized, for example an aqueous dispersion of cellulose microfibrils is treated with relatively high shear, and or pre-homogenized and dried, preferably in the presence of protective additive (this is for example described in WO2017019752A1). This allows for the use of lower shear during step e) as can be suitably achieved by a conventional rotor-stator mixing device, such as a colloid mill, as known in the art. Such pre-homogenized and dried source of cellulose fibrils are commercially available, e.g. from CP Kelco.

It may be preferred that dispersion step d) is carried out on the water phase comprising the CMFs, i.e. before combination with the oil phase, i.e. before step c).

As indicated above, it may be preferred, that an optional homogenization step is carried out on the water phase, e.g. resulting from step a), comprising water and the cellulose microfibrils, and possibly the emulsifier. It may be preferred, that the step of dispersing the cellulose microfibrils, step d), is carried out on the water phase resulting of step a). Step d) in this way preferably coincides with such homogenization step of the water phase (i.e. one homogenization/dispersion step before the addition of the oil). Indeed, preferably, step d) is carried out on the water phase of step a) before addition of the oil. It may be preferred that the emulsifier is added before or during such dispersion of the cellulose microfibrils. Preferably, the step of dispersing the cellulose microfibrils, step d), is carried out on the water phase of step a) before addition of the oil phase and before addition of the emulsifier. It may be preferred, that the step of dispersing the cellulose microfibrils, step d), is carried out on the water phase of step a) before addition of the oil phase, and after addition of the emulsifier.

During the dispersion of the cellulose microfibrils in step d), i.e. before step c), (i.e. before oil is added), or simultaneously with step e), the cellulose microfibrils are preferably subjected to a pressure of more than 700 bar, preferably a pressure of between 700 and 2000 bar, more preferably a pressure of more than 900 bar and less than 1800 bar and most preferably of between 1000 and 1500 bar. If homogenization is carried out by two or even more passages, the pressure can be reduced, as the skilled person will appreciate. The homogenization is preferably carried out using a high-pressure homogenizer or microfluidizer, as known in the art.

It may be preferred in the present invention, that a further hydrocolloid, *i.e.* in addition to the cellulose microfibrils, is added, as indicated above. Such a further hydrocolloid may preferably be native or physically modified starch, plant mucilage or gum such as xanthan gum or guar gum. It is preferred to add the further hydrocolloid before or during, preferably before, homogenisation step e). It is preferred to add the further hydrocolloid before or during, preferably before, combination of the water phase and the oil phase, i.e. before or during, preferably before, step c). In this way, the further hydrocolloid is added to the water phase.

As indicated above, under step a), it may be preferred, that the process comprises a homogenisation step of the water phase, before combining with the oil phase, coinciding with step d). The further hydrocolloid is preferably added before such homogenisation step of the water phase, thereby undergoing the optional homogenisation of the water phase if carried out. It may however also be preferred to add the further hydrocolloid after an optional homogenisation step of the water phase and before step c), *i.e.* before combination with the oil phase.

In case native starch or physically modified starch is added, this will preferably be activated by a heating step, above the gelatinisation temperature of the starch, as the skilled person understands. In that case, a heating step is applied after and preferably during and after the addition of the starch, wherein the temperature is above the gelatinisation temperature of the starch. Heating is suitably carried out to a temperature of between 60 and 95 °C, preferably of between 65 and 90 C°, and most preferably of between 70 and 88 °C. Such a heating may preferably be carried out for a short moment, for example between 4 and 20 minutes, preferably 8 and 15 minutes. Higher temperatures are preferably combined with shorter time periods, as the skilled person will understand. Heating of starch can be carried out separately from the part of the water phase comprising the cellulose microfibrils, e.g. in a separate batch, which is subsequently added to the water phase, preferably before step c). It may however be preferred that starch is added to the water phase comprising the cellulose microfibrils and then the water phase comprising starch and cellulose microfibrils is heated. It may however be preferred that starch is added to the water phase comprising the cellulose microfibrils and then the water phase comprising starch and cellulose microfibrils is heated and then homogenised to achieve the desired CHP. Heating is preferably carried out before addition of the oil, step c). If heating is applied, it is preferred, that there is one heating step in the process, wherein the water phase is heated comprising water, cellulose microfibrils and the further optional hydrocolloid.

After or during, preferably after, step c), combination of the water phase and the oil phase, a homogenization step e) is then carried out that homogenizes the oil phase, the water phase and the emulsifier to result in an oil in water emulsion. Homogenization step e) is suitably carried out using conventional machinery, such as a rotor stator device like a colloid mill. Especially in the case that the cellulose microfibril is dispersed in the water phase, step d) carried out before step c), it is preferred that step e) is carried out using a rotor stator device such as a colloid mill. Homogenization of step e) preferably results in an average oil droplet size D3,3 of below 15 micron, preferably of between 1 and 10 micron.

Optional ingredients like salt or sugar or flavours are suitable added after the cellulose microfibrils are combined with the water and preferably before addition of oil, step c). Acidulant, such as vinegar or lemon juice is preferably added after step e). The process therefore may comprise a step of adding acidulant, preferably adding acidulant before step c), before step e) or after step e), and even more preferably, of mixing the oil in water emulsified food composition resulting from step e) with acidulant.

### Use

In a further aspect, the invention relates to the use of from 0.1 to 6 wt%, preferably of from 0.1 to 4 wt% of cellulose microfibrils , wherein the average degree of crystallinity of the cellulose is below 50%, or wherein the cellulose microfibrils are bacterial cellulose microfibrils, to provide a reduction of syneresis in an oil-in-water emulsified food composition comprising from 3 to 65 wt% of vegetable oil and an emulsifier, and wherein the oil in water emulsion is free from chemically modified non-emulsifying starch and wherein the composition has a CHP of more than 0.03. Such a reduction provides a level of syneresis that is preferably as close as possible to the level observed in a full-fat oil-in-water emulsion. In particular it is preferably as close as possible to the syneresis level observed in an equivalent oil-in-water emulsified food composition that contains chemically modified starch and no CMF, and preferably has the same Stevens rheology in grams. Syneresis is preferably less than 2.0 g, preferably less than 1.5 g, preferably less than 1.0 grams of liquid measured for a period of 5 days. Preferably, the amount of syneresis is less than 2.5, preferably less than 2 g, more preferably less than 1.5 g when collected over a period of 30 days. It was found in the present invention, that the technology as described in the art could not provide the desired syneresis reduction as required in semi-solid oil in water emulsified compositions that have a low oil level and rely on chemically modified starch (i.e. no CMF present). With a CHP of more than 0.03, the level of dispersion of the fibrils through the emulsified composition was capable of achieving this syneresis reduction while maintaining a smooth and non-sticky mouthfeel as resembling a traditional full-fat mayonnaise. The use of cellulose microfibrils in the composition with a CHP of more than 0.03 showed the additional advantage, that especially when the composition contains a further hydrolloid, negative attributes that typically come with these hydrocolloids in the context of low-oil oil plant-based oil in water emulsions are reduced or not present. For example, the mouthfeel of the resulting composition is smooth, and not 'sticky' or 'slimy', as often observed when native starch or gum is present, respectively. Preferably, therefore, the invention further relates to the use of from 0.1 to 6 wt%, preferably 0.1 to 4 wt% of cellulose microfibrils, wherein the average degree of crystallinity of the cellulose is below 50%, or wherein the cellulose microfibrils are bacterial cellulose microfibrils, to improve the mouthfeel (preferably to reduce sticky or slimy mouthfeel) in an oil-in-water emulsified food composition comprising from 3 to 65 wt% of vegetable oil and an emulsifier, and wherein the oil in water emulsion is free from chemically modified non-emulsifying starch and wherein the composition has a CHP of more than 0.03 and wherein preferably the composition further comprises an additional hydrocolloid. Such further hydrocolloid is preferably selected from the group consisting of non-modified starch, physically modified starch, gum such as preferably xanthan gum or guar gum, guar flour, plant mucilage and mixtures thereof.

### Methods used in the document

### Syneresis measurement

Syneresis in mayonnaises is the fluid, which separates from the structure during storage after disrupting the structure by e.g. spooning.

For the determination of stability against syneresis, a simple technique was used at lab scale to mimic the cutting of the emulsions structure that occurs during spooning/scooping: a tube was inserted one day after mayonnaise sample preparation to ensure that the structure has fully set. The tube has been cut from a large Perspex tube with an inner diameter of 20 mm and an outer diameter of 25 mm. The height is 45 mm. The tube is sealed from the bottom by a filter paper, which allows free flow of fluid. The amount of drained liquid was measured by removing with a pipette and weighing. The water was placed back after weighing. The syneresis was measured at room temperature. The test is carried out in duplo.

### Texture measurement

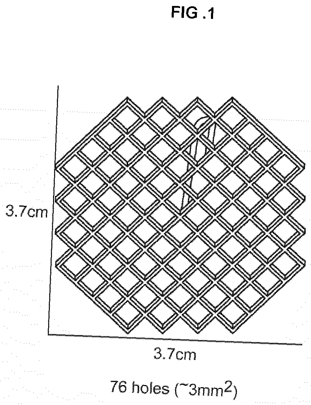

The consistency of compositions according to the present invention can be measured using Stevens value, which can be measured as follows:
*Thickness - Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25 mm using a grid, at 2mm per second penetration rate, in a cup having a diameter of 65 mm, that contains the emulsion; wherein the grid comprises square openings of approximately 3x3 mm, is made up of wire with a thickness of approximately 1mm, and has a diameter of 40 mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded, giving the Stevens value in gram. A drawing of the grid is given in Figure 1. The grid is made from stainless steel, and has 76 holes, each hole having a surface area of approximately 3x3 mm.

### The composition homogeneity parameter (CHP)

According to the invention, the composition has a composition homogeneity parameter, CHP, of at least 0.030. The CHP provides a measure for the extent to which the CMFs have been the homogenously dispersed in the composition. The CHP can be measured with a method that is based on confocal scanning laser microscopy (CSLM) performed on a standardized sample comprising the CMFs. The CHP of the composition is established by the following protocol. The protocol to establish the parameter includes three parts: (A) standardized sample preparation, (B) CSLM microscopy to obtain micrographs of the standardized sample, and (C) digital image analysis to calculate the CHP value.

Thus, the protocol includes the steps of:

### (A) Standardized sample preparation

a. Preparing 200 g of an aqueous, concentration-standardised sample at room temperature from the semi-solid oil-in-water emulsified food composition, wherein the concentration-standardised sample comprises the source of CMFs (equivalated to the amount of cellulose content) at a concentration of 0.05 wt-% with respect to the weight of the standardised sample was prepared in a 500 ml plastic beaker of 80 mm inner diameter;
b. Evenly distributing the CMFs over the concentration-standardised sample volume by agitating the mixture is stirred in using a Silverson L5M-A overhead mixer (small screen, 1 mm holes) at 3000 rpm for 3 min;
c. Dying (i.e. fluorescently labelling) the CMFs by providing 25 µL of 0.5 % w/v Congo Red aqueous solution and contacting a 3 mL of the standardised sample, which are transferred to a glass vial with a plastic Pasteur pipette. In order to ensure even distribution of the dye throughout the sample, it may for instance be gently shaken;
d. Filling a sample holder suitable for performing CSLM with an aliquot of the dyed standardised sample: 400 µL of sample is transferred onto a glass coverslip (High precision No. 1.5H, 2.4 cm width, 5 cm length, 170 ± 5 µm thickness) with a 1 mL tip.

The sample holder of step (d) suitably includes two cover slides separated by a spacer comprising a bore of sufficient volume to enable the recording of sufficient micrographs for digital image analysis as described below.

### (B) To obtain micrographs, the protocol includes the following step:

e. imaging the dyed standardized sample with a Zeiss LSM 880 confocal scanning laser microscope equipped with a diode -pumped solid state laser line emitting at a wavelength of 561 nm and operated at excitation wavelengths: 570 - 687 nm, fixed laser power, using a 10x objective with a numerical aperture of 0.45 and working distance 5.2 mm, and thereby recording at least 25 independent micrographs at a resolution of 1024 x 1024 pixels where each pixel represents a sample size of within the range of 1490 by 1490 nm to 1540 by 1540 nm, adjusting the laser gain settings such that in every image between 0.1 and 3 % of the pixels are saturated and recording the micrographs at a colour depth of (at least) 12 bits per pixel.

The CHP is a measure relating to the homogeneity of the CMF in the composition. Therefore, micrographs should be recorded whilst avoiding imaging air bubbles, oil droplets, sample edges or areas where the source of CMF is locally concentrated. Likewise, care should be taken to avoid imaging other objects of macroscopic dimensions that do not originate from the source of CMF. This may be conveniently accomplished for instance by removing such objects of macroscopic dimensions during sample preparation by sieving or centrifuging.

Typically, one or more photomultiplier tubes are used as the light detectors in the microscope. Preferably the microscope is equipped with three photomultiplier tubes (PMTs). Independent micrographs are micrographs that are non-overlapping, both in the x-y plane and in the z-direction. The micrographs may suitably be recorded at a colour depth higher than 12 bits (for instance at 24 bit RGB), since this can easily be converted to a lower colour depth by well-known means (e.g. using well-known image analysis software including for instance ImageJ.).

### (C) The digital image analysis part of the protocol involves the following steps:

f. ensuring that the micrographs are present as or converted to a format with a single intensity value for each pixel;
g. normalising each individual micrograph by recalculating the pixel values of the image so that the range of pixel values used in the image is equal to the maximum range for the given colour depth, thereby requiring 0.4% of the pixels to become saturated;
h. obtaining for each individual micrograph the image histogram and, if necessary, removing discrete, single point spikes from each histogram by visual inspection and exclude them from the analysis (e.g. using MATLAB);
i. for each individual image histogram determining the full width at half maximum (FWHM), by first determining the maximum count in the histogram and the channel containing this maximum count (the maximum channel), then counting the number N of channels between the first channel containing a value equal or higher than half the maximum and the last channel containing a value equal or higher than half the maximum thereby including this first and last channel in the count N, and then calculating the FWHM by dividing the count *N* by the total number of channels;
j. calculating the composition homogeneity parameter CHP, wherein CHP is the average of the FWHM values obtained for the individual micrographs.

The digital image analysis steps may suitably be carried out using well-known image analysis software including for instance ImageJ. The result of step (f) should be that the image is of a format wherein the intensity for each pixel is expressed as a single value. This is for instance the case if the image is a "grey-scale" image. In contrast, images in RGB format or a related format having three intensity values per pixel should be converted. This is easily achieved by well-known operations in the field of digital image analysis. An example of a suitable output format would be a grey-scale image with 8 bits per pixel.

The normalising operation of step (g) is generally known as a histogram stretch operation or a contrast stretch operation. The normalisation is performed by allowing a small percentage **of pixels** in the image to become saturated. Here saturation includes both the minimum and maximum value for the given colour depth. In an 8 bit greyscale image, the minimum value would be 0 and typically displayed as black, whilst the maximum value would be 255 and typically displayed as white. The image histogram of step (h) is a well-known property for digital images, representing the distribution of the pixels over the possible intensities, by providing the pixel count for each intensity channel. For the purpose of the spike-removal of step (h), the value for a particular channel is considered a spike if it is considerably higher than the values of the adjacent channels, typically at least a factor of 1.5 higher. The lower half-maximum channel in step (i) corresponds to the channel containing a count of half the maximum count that is furthest away from the maximum channel on the low-intensity side of the maximum channel. Analogously, the upper half-maximum channel corresponds to the channel containing a count of half the maximum count that is furthest away from the maximum channel on the high-intensity side of the maximum channel. The FWHM that is obtained in step (i) will be a value between 0 and 1.

### Centrifugation

Centrifugation is carried out with a Sigma 3-18KS equipped with a 13190 rotor for round buckets and with maximum radius 17.1 cm.

Where the centrifugation force is given, it is given as a dimensional "relative centrifugal force", which is defined as r *ω*²/*g*, where g = 9.8 m/s² is the Earth's gravitational acceleration, r is the rotational radius of the centrifuge, *ω* is the angular velocity in radians per unit time. The angular velocity is *ω* = *rpm* × 2*π* / 60, where rpm is the centrifuge "revolutions per minute".

### Crystallinity of cellulose microfibrils measurement

According to the invention, the composition comprises CMF wherein the average degree of crystallinity of the cellulose is below 50%. The protocol to establish the parameter includes two parts: (A) standardized sample preparation and (B) degree of crystallinity of cellulose microfibrils.

Thus, the protocol includes the steps of:

### (A) Standardized sample preparation

a. Preparing 200 g of an aqueous, concentration-standardised sample at room temperature from the semi-solid oil-in-water emulsified food composition, wherein the concentration-standardised sample comprises the CMFs (equivalated to the amount of cellulose present in the source of CMFs, e.g. dietary fibre) at a concentration of 0.05 wt-% with respect to the weight of the standardised sample was prepared in a 500 ml plastic beaker of 80 mm inner diameter;
b. Evenly distributing the CMFs over the concentration-standardised sample volume by agitating the mixture is stirred in using a Silverson L5M-A overhead mixer (small screen, 1 mm holes) at 3000 rpm for 3 min;
c. All oil and soluble solids are removed in the following centrifugation and washing steps. A sample of 40 g was added to a 50 ml conical tube (Falcon, type 352070). The sample was subsequently subjected to a first centrifugation step using a Sigma 3-18KS equipped with a 13190 rotor for round buckets and with maximum radius 17.1 cm for 15 min at 5000 rpm. The supernatant was decanted and 40 g of water was added. The sediment was dispersed using benchtop Retsch TM01 Vortex Mixer at operating max speed. Then the sample was centrifuged for a second time. The supernatant was decanted, and 40 g of water was added to the sediment, and redispersed with a benchtop Retsch TM01 Vortex Mixer at operating max speed. Then the sample was centrifuged for a third time, at the same conditions, and the supernatant was decanted.
d. The resulting wet sediment from step (c) was placed in overnight vacuum oven drying (P = 25 - 35 mbar, T = 40 °C for t = 16 hours oven (ThemoSCientific VacuTherm).

### (B) Degree of crystallinity of cellulose microfibrils

To determine the degree of crystallinity of the CMF, the powder from step (d) is measured with a wide angle X-ray scattering (WAXS) using the following protocol. The measurements are performed on a Bruker D8 Discover X-ray diffractometer with GADDS (General Area Detector Diffraction System) (From Bruker-AXS, Delft, NL) (Part No: 882-014900 Serial No: 02-826) in a theta/theta configuration. A copper anode is used, and the K- alpha radiation with wavelength 0.15418 nm is selected. The instrumental parameters as used are shown in the table below.

**Table 2: D8 Discover instrumental parameters for WAXS measurements.**

| | 2θ (9 - 42°) |
|---|---|
| Theta 1 | 10.000 |
| Theta 2 | 10.000 / 25.000 |
| Detector Bias (kV / mA) | 40 / 40 |
| Time (sec) | 300 |
| Collimator (mm) | 0.3 |
| Detector distance (cm) | 25 |
| Tube Anode | Cu |

The degree of crystallinity Xc was calculated from the following equation: $Xc \left(%\right) = \frac{Area crystalline phase}{Area crystalline + amorphous phase} ∗ 100 %$

The areas of the diffraction lines of the crystalline phase were separated from the area of the amorphous phase by using the Bruker EVA software (version 12.0).

### Microfibril characterisation: Diameter of microfibrils

Transmission electron microscopy (TEM) was used to directly determine the diameter of the microfibrils (D. Harris et. al. Tools for Cellulose Analysis in Plant Cell Walls Plant Physiology, 2010(153), 420). The dispersion of plant source rich in primary cell wall material was diluted in distilled water resulting in a thin layer of mostly single fibers or single clusters of fibers. The dispersions were imaged on a Carbon only 300 mesh Copper TEM grid (Agar Scientific) and imaged using a Tecnai 20 Transmission electron microscope (FEI Company) operated at a voltage of 200 kV. To enhance image contrast between individual microfibrils, a 2 % phosphotungstic acid solution at pH 5.2 was used as a negative stain. For this the fiber-loaded TEM grids were incubated on 2% phosphotungstic acid and air-dried after removal of the excess of fluid.

The present invention will now be exemplified by the following, non-limiting examples.

### Examples

### Example 1 CMF comparison with other thickeners

### 1. Mayonnaise preparation

Low-oil mayonnaises (20 wt% oil) were prepared with: cellulose microfibrils (CMFs), chemically modified corn starch (abbreviated as MS; E1442; Ingredion Incorporated, Westchester, IL, USA), native waxy corn starch (abbreviated as WCS; Novation^{®} 2300, Ingredion Incorporated, Westchester, IL, USA) and xanthan gum (XG; Jungbunzlauer, Basel, Switzerland). Each thickening agent (CMF, MS, WCS, XG) was added to low-oil mayonnaises at three concentrations. Table 3 summarises the composition of the low-oil mayonnaises.

The first step in preparation of the low-oil mayonnaises was to prepare the aqueous hydrocolloid solutions and dispersions. Modified and waxy corn starch were first mixed with water and cooked for 5 min at 85°C in a Thermomix^{®} while continuously stirring (Thermomix^{®} TM5, Vorwerk, Germany). The starch pastes were left to cool down to 50°C and the amount of water lost due to evaporation was added back to the paste. Xanthan gum was dissolved in water by mixing at room temperature for at least 60 min using an overhead stirrer. Cellulose microfibrils dispersions were prepared by first suspending citrus fibre powder (HERBACEL^{®} AQ^{®} Plus, Herbafood Ingredients, Werder, Germany; (65.8% wt% cellulose: Fechner, A., et al. Effects of legume kernel fibres and citrus fibre on putative risk factors for colorectal cancer: a randomised, double-blind, crossover human intervention trial. Nutr J 12, 101 (2013). https://doi.org/10.1186/1475-2891-12-101)) in deionised water. pH of the samples was adjusted to pH 4 using 1M HCl (Sigma-Aldrich, Saint Louis, MO, USA). The suspensions were thoroughly mixed using a L5M-A Silverson laboratory mixer with a 1 mm screen hole (Silverson Machines Ltd., Chesham, United Kingdom) at 3000 rpm for 10 min, followed by one passage through a high-pressure homogeniser (Microfluidizer M-110S, Microfluidics^{™}, Newton, MA, USA) with a z-shape geometry (ø 87 µm) at a pressure of 1200 bar.

The hydrocolloid solutions and dispersions were subsequently mixed with the other ingredients of the aqueous phase (sucrose (Coarse Medium, 0.315-1.25 mm, Brenntag Nederland B.V.) acetic acid (Vinegar spirit 12%, Carl Keuhne KG GmbH CO), salt (Salt Evaporated Non lodized, Brenntag Nederland B.V.), sorbic acid (Nutrinova^{®} Sorbic Acid, Brenntag Nederland B.V.), calcium disodium ethylenediaminetetraacetic acid (CaNa₂EDTA, Solvitar E385 food, Brenntag Nederland B.V.)) and combined with egg yolk (Table 3). Lemon flavour was added to the oil phase. The soybean oil phase was added slowly to the aqueous phase while stirring at 5200 rpm using a L5M-A Silverson laboratory mixer with 1 mm hole emulsor screen (Silverson Machines Ltd., Chesham, United Kingdom). Once all oil was added, the speed was increased to 7200 rpm for 1 min and the beaker with the emulsion was moved around to ensure complete homogenisation. The finished mayonnaises were transferred to 200 ml glass jars and stored at 4°C until further use. Two batches of 2600 g were prepared for each mayonnaise.

**Table 3** Composition of low-oil mayonnaises prepared with four thickening agents. Concentrations are given as wt%.

| | | | | | | | | | | | | |
|---|---|---|---|---|---|---|---|---|---|---|---|---|
| | Cellulose microfibrils (CMFs) | | | Modifield strach (MS) | | | Waxy corn strach (WCS) | | | Xantham gum (XG) | | |
| Sample code | S01 | S02 | S03 | S07 | S08 | S09 | S04 | S05 | S06 | S10 | S11 | S12 |
| Thickener | 1.44 | 1.6 | 1.76 | 5.0 | 5.5 | 6.0 | 5.5 | 6.0 | 6.5 | 1.6 | 1.8 | 2.0 |
| Water | 67.9 | 67.8 | 67.6 | 64.4 | 63.9 | 63.4 | 63.9 | 63.4 | 62.9 | 67.8 | 67.6 | 67.4 |
| Soybean oil | 20.0 | 20.0 | 20.0 | 20.0 | 20.0 | 20.0 | 20.0 | 20.0 | 20.0 | 20.0 | 20.0 | 20.0 |
| Egg yock | 4.0 | 4.0 | 4.0 | 4.0 | 4.0 | 4.0 | 4.0 | 4.0 | 4.0 | 4.0 | 4.0 | 4.0 |
| Sucrose | 3.0 | 3.0 | 3.0 | 3.0 | 3.0 | 3.0 | 3.0 | 3.0 | 3.0 | 3.0 | 3.0 | 3.0 |
| Acetic acid | 2.0 | 2.0 | 2.0 | 2.0 | 2.0 | 2.0 | 2.0 | 2.0 | 2.0 | 2.0 | 2.0 | 2.0 |
| Salt (NaCl) | 1.5 | 1.5 | 1.5 | 1.5 | 1.5 | 1.5 | 1.5 | 1.5 | 1.5 | 1.5 | 1.5 | 1.5 |
| Sorbic acid | 0.1 | 0.1 | 0.1 | 0.1 | 0.1 | 0.1 | 0.1 | 0.1 | 0.1 | 0.1 | 0.1 | 0.1 |
| Lemon flavour | 0.02 | 0.02 | 0.02 | 0.02 | 0.02 | 0.02 | 0.02 | 0.02 | 0.02 | 0.02 | 0.02 | 0.02 |
| CaNa₂EDTA | 0.0075 | 0.0075 | 0.0075 | 0.0075 | 0.0075 | 0.0075 | 0.0075 | 0.0075 | 0.0075 | 0.0075 | 0.0075 | 0.0075 |

### 2. Appearance

Although yellowness intensities of the mayonnaises were generally low, the presence of CMF resulted in a slight increase of yellowness, which is a surprising advantage in the context of the invention. Without willing to be bound by theory, the inventors believe, that the presence of CMF results in slightly bigger oil droplets, compared to starch-textured compositions, and that the larger oil droplet size of CMF-thickened mayonnaises cause this difference in appearance. Visual sliminess and visual thickness are important attributes for mayonnaise consumers. Mayonnaises thickened with XG had a less smooth, slightly curdled, appearance than the other mayonnaises. Visual sliminess was the least in CMF-thickened mayonnaises. As anticipated, visual thickness increased with increasing thickener concentration, yet it was not affected by the type of thickener used. Large differences in visual thickness between mayonnaises thickened with different biopolymers were not observed.

### 2.2 . Stability against Syneresis

Syneresis of the mayonnaise samples, storage time was 1 year, was carried out during a period of several weeks, with intermediate measurement moments at 1, 5, 8, 12 days.

**Table 4. Syneresis measure on 1 year old samples S1-S12.**

| **Time, days** | | **Syneresis, [g]** | | | | | | | | | | |
|---|---|---|---|---|---|---|---|---|---|---|---|---|
| | **S01** | **S02** | **S03** | **S04** | **S05** | **S06** | **S07** | **S08** | **S09** | **S10** | **S11** | **S12** |
| 0 | 0 | 0 | 0 | 20* | 20* | 20* | 0 | 0 | 0 | 0 | 0 | 0 |
| 1 | 0.221 | 0.161 | 0.16 | 20* | 20* | 20* | 0 | 0 | 0 | 0 | 0 | 0 |
| 5 | 0.868 | 0.563 | 0.642 | 20* | 20* | 20* | 0 | 0 | 0 | 0.041 | 0 | 0 |
| 8 | 1.143 | 0.73 | 0.797 | 20* | 20* | 20* | 0 | 0 | 0 | 0.057 | 0.024 | 0 |
| 12 | 1.354 | 0.985 | 0.981 | 20* | 0* | 20* | 0 | 0 | 0 | 0.097 | 0.037 | 0.005 |
| 26 | 2.29 | 1.67 | 1.70 | 20* | 20* | 20* | 0 | 0 | 0 | 0.23 | 0.09 | 0.02 |

| | | | | | | | | | | | | |
|---|---|---|---|---|---|---|---|---|---|---|---|---|
| *Sample show excessive syneresis. | | | | | | | | | | | | |

As can be observed from Table 4, the products thickened with native starch show excessive syneresis.

### 3. CHP

All samples with CMF show CHP parameter according to the invention.

**Table 5. Mean intensities Composition Homogeneity Parameter (CHP) of samples containing CMFs.**

| **Sample code** | **CHP** |
|---|---|
| S1 | 0.122 ± 0.014 |
| S2 | 0.117 ± 0.010 |
| S3 | 0.114 ± 0.013 |

### 4. Conclusions

CMF dispersed to a CHP of more than 0.030 can be used as thickener in low-oil food mayonnaise as a substitute for conventionally used chemically modified starch without greatly affecting sensory properties of the mayonnaise. Samples with CMF had a more yellow appearance. Samples with only native starch as a thickener showed unacceptable levels of syneresis and samples with only xanthan gum had a slightly rough/curdled appearance.

### Example 2

### Materials and Methods

### 1.1. Materials preparation - processing

### 1.1.1 Cellulose microfibril dispersion

A dispersion of the source of cellulose microfibrils, Herbacel AQ Plus Citrus Fibre powder, type N, was prepared using an overhead mixer (Silverson, 4000 rpm, 5 min). The predispersion was homogenised once using an APV Gaulin high pressure homogeniser (HPH) operating at 300 bar). For sample S15, the Citrus Fibre slurries were finally processed with a Microfluidizer^{™} (lab scale device from Microfluidics - M 110S). The processing parameters of the Microfluidizer^{™} (MF) used in this study are:
- pressure = 1400 bar (140MPa)
- chamber design = Z chamber of 87 µm
- one pass

The Citrus Fiber dispersions were pre-treated by 300 bar high pressure homogenisation in order to facilitate the defibrillation of cell walls present in the Citrus Fiber powder The microfluidization at 1400 bar provided a dispersion of cellulose microfibrils in the final food composition with a CHP as desired.

### 1.1.2 Formulation and process parameters of mayonnaise prototypes

The recipes of the three prototypes are as indicated in Table 6.

**Table 6 Recipes of low oil mayonnaise prototypes.**

| | **S13** | **S14** | **S15** |
|---|---|---|---|
| | % | % | % |
| Tap water | 65.543 | 65.543 | 65.843 |
| **Citrus fibres AQ type N** | 2.5 | 2.7 | 2.4 |
| Stabilised, enzyme modified, Egg Yolk. 10% salt | **4.0** | **4.0** | **4.0** |
| Sugar | 3 | 3 | 3 |
| NaCl | 2 | 2 | 2 |
| Mustard flour | 0.4 | 0.4 | 0.4 |
| Xanthan Gum RD | 0.2 | - | - |
| CaNa₂EDTA | 0.0075 | 0.0075 | 0.0075 |
| K-Sorbate | 0.1 | 0.1 | 0.1 |
| **Sunflower seed Oil** | **20.0** | **20.0** | **20.0** |
| 12% Acetic acid (Vinegar) | 2.25 | 2.25 | 2.25 |
| **Total** | **100.0** | **100.0** | **100.0** |
| pH (after HAc) | 3.77 | 3.77 | **3.750** |
| Lactic Acid (88%) | 0.0629 | 0.0686 | 0.0750 |
| pH | 3.60 | 3.58 | 3.45 |
| **Stevens Value (g)** | **185** | **190** | **183** |

**Table 7 Ingredients used in the formulation of the low oil mayonnaise prototypes.**

| **Ingredient** | **Type** | **Producer** | **Batch #** |
|---|---|---|---|
| Tap water | | | |
| NaCl | | SUPRACEL | 29 06 4220486 |
| Sucrose | | CSM | |
| Citrus fibre | AQ+ Type N | Herbafood | 30712296 |
| Egg Yolk | (Stabilized: enzymatically-modified). 11% salt | Nive | |
| Sunflower oil | | Albert Heijn | L8319 |
| CaNa2EDTA | DISSOLVINE NA2-P | AKZO NOBEL | 601S6003 |
| Acetic Acid 12% | foodgrade 65% | Epenhuizen Chemie | |
| Mustard flour | Pure Mustard Flour | G.S. Dunn | 106 |
| K-Sorbate | | Fluka | 438957/1 |
| Lactic Acid 85% | | Sigma Aldrich | 085K0681 |

Acidic oil-in-water emulsions of the mayonnaise type were prepared as follows. For the preparation of a pre-emulsion, a shear treatment has been first applied to a citrus fibre dispersion (either high pressure homogeniser APV Gaulin at 300 bar for S13 and S14, or high pressure homogeniser APV Gaulin at 300 bar and then Microfluidizer at 1400 bar, one pass, Y chamber, see paragraph above) for S15, and then mixed with all the other ingredients (e.g. CaNa2EDTA, egg yolk, sodium chloride, sugar, acid) apart from oil. The oil was then incorporated and the pre-emulsion was further emulsified by passing it once through an emulsification device (high pressure homogeniser APV Gaulin, at relatively low shear, 350 bar).

### 1.2. Methods

### 1.2.1. Sensory tests

For the sensory tests a trained sensory panel characterized the products in terms of perceived attributes and intensities. The method of training used was a variation on the 'Spectrum' approach, the so-called UFASM method: Product Specific Scaling Method. The main features of the UFASM approach are:
- Training on scale use: the panel was trained to score the intensity of all attributes according to some scale references.
- Using fixed scale: this enables us to compare intensities of attributes relative to each other.

The sensory panel was composed of a small number (10-11 persons) of highly trained panelists selected from the top 10% of all panelists after screening on their sensory abilities and sensitivities. Each product was tested pure and on white bread. Two replicates per product were made.

### 2. Results and Discussion

A low oil (20%) mayonnaise structured with cellulose microfibrils (S15) with high CHP in the composition was studied. Control samples were also prepared to compare:
- a low oil mayonnaise structured with activated cellulose microfibrils (high pressure homogeniser, APV Gaulin, 300 bars, S14)
- a low oil mayonnaise structured with cellulose microfibrils (high pressure homogeniser, APV Gaulin, 300 bars) and xanthan gum (S13).

The amount of oil and the processing parameters for the three mayonnaise prototypes were unchanged. The amount of cellulose microfibrils was adjusted to get the three low oil mayonnaise prototypes with similar Stevens values (SV). The target SV range was 180 - 210 in order to have prototypes of which the thickness was comparable to commercial low-oil mayonnaise.

### 2.1 Syneresis

Syneresis is a common problem of dispersed systems with attractive droplets and/or particles which are prompted to ageing which lead to rearrangement and exclusion of continuous phase (e.g. water) or a simple gravity driven drain of continuous phase when the structure is damaged. While 20% oil mayonnaise products are designed to have a similar texture, the syneresis level between the three samples differs significantly (Table 8). S14 containing cellulose microfibrils but a lower CHP showed the highest level of syneresis. The syneresis is reduced by 27% in case Xanthan gum is present (on top of the cellulose microfibrils) for S13 in comparison with sample S14. Highest syneresis reduction was observed for S15 (invention) where the syneresis is reduced by 39%.

Thus, cellulose microfibrils appeared to be able to structure low-oil mayonnaises while achieving superior syneresis reduction. The use of cellulose microfibrils dispersed to a composition homogeneity parameter of more than 0.03 forms an attractive alternative to xanthan gum even to the combination of xanthan gum with cellulose microfibrils with a relatively low level of dispersion, as a stabiliser for low oil mayonnaise, given the superior syneresis reduction.

**Table 8. Syneresis profile for the 20% oil mayonnaise prototypes structured with homogenized citrus fiber (S14), homogenized citrus fiber and Xanthan gum (S13) and with highly activated CMF from citrus fibre (S15), CHP more than 0.030. Syneresis is measured at room temperature.**

| **Time (days)** | | **Syneresis, [g]** | |
|---|---|---|---|
| | S14 | S15 | S13 |
| 0 | 0 | 0 | 0 |
| 5 | 1.261 | 0.936 | 0.528 |
| 10 | 1.726 | 1.291 | 1.152 |
| 18 | 2.290 | 1.439 | 1.676 |
| 32 | 2.281 | 1.439 | 1.671 |

### 2.2 Sensory

A sensory test was performed to assess sensory aspects of the compositions. S15, the mayonnaise structured with CMF and a CHP higher than 0.030, differed compared to the other two samples. The S15 is the glossiest in appearance. The sample is also perceived as thicker. Finally, the sample is least solvable and has least absorption on bread. The Sample S15 shows a mouthfeel that is not sticky and is similar to that of a full fat (78% oil) equivalent.

## Claims

1. Food composition in the form of an oil-in-water emulsion, comprising:
• 3 to 65 wt% of vegetable oil,
• Oil-in-water emulsifier,
• 0.1 to 6 wt% of cellulose microfibrils, wherein the average degree of crystallinity of the cellulose is below 50%, or wherein the cellulose microfibrils are bacterial cellulose microfibrils,
wherein the composition is free from chemically modified, non-emulsifying starch,
wherein the food composition has a composition homogeneity parameter (CHP) of at least 0.03.

2. Food composition according to any one of the preceding claims, wherein the cellulose fibres have an average degree of crystallinity of less than 30%.

3. Food composition according to any one of the preceding claims, wherein the cellulose microfibrils are citrus fiber.

4. Food composition according to any one of the preceding claims, wherein the composition comprises a further hydrocolloid that is selected from the group consisting of inulin, fructooligosaccharides, galacto-oligosaccharides, xylooligosaccharides, oligoderivatives of starch, husks, brans such as preferably mustard bran, psyllium, polysaccharides, physically modified starch, native starches, polycarbophil, lignin, araomogaiactans, chytosans, oat fiber, soluble corn fiber, dextrin, dextran, locust bean gum, konjac gum, derivatives of locust bean gum, hydroxypropylmethyl, cellulose (HPMC), pectin, gums, gelatin, gellan gum, xanthan gum, guar gum, pectin, carrageenan, cellulose gum, gum arabic, plant mucilage or mixtures thereof.

5. Food composition according to any one of the preceding claims, wherein the further hydrocolloid is selected from the group of non-modified starch, physically modified starch, xanthan gum, guar gum, guar seeds flour, and plant mucilage and mixtures thereof.

6. Food composition according to any one of the preceding claims, wherein the composition comprises non-modified starch or physically modified starch in an amount of from 0.1 to 15 wt%, preferably 0.1 to 5 wt%, based on the weight of the composition.

7. Food composition according to claim 4, wherein the non-modified or physically modified starch is selected from potato starch, tapioca starch, corn starch and mixtures thereof.

8. Food composition according to any one of the preceding claims wherein the emulsifier selected from the group consisting of phospholipid, whey protein, casein, algae protein, legume protein, OSA starch and mixtures thereof, preferably is selected from the group consisting of pea protein, chickpea protein, lentil protein, egg yolk and mixtures thereof and most preferably is egg yolk.

9. Food composition according to any one of the preceding claims, wherein the composition comprises from 5 to 50 wt%, preferably of from 10 to 40 wt%, preferably 10 to 25wt% of vegetable oil.

10. Food composition according to any one of the preceding claims, wherein the composition has a Stevens consistency at 20°C of between 80 and 400 grams, preferably of between 100 and 250 grams.

11. Process to manufacture an oil in water emulsified food composition comprising:
• a water phase comprising water and cellulose microfibrils,
• oil-in-water emulsifier,
• an oil phase,
the process comprising the steps of:
a) providing a water phase comprising:
• water,
• from 0.1 to 6 w%, based on the weight of the resulting food composition, of cellulose microfibrils, wherein the average degree of crystallinity of the cellulose is below 50%, or wherein the cellulose microfibrils are bacterial cellulose microfibrils,
b) adding oil-in-water emulsifier,
c) combining an oil phase comprising vegetable oil with the water phase,
d) dispersing the cellulose microfibrils sufficient that the resulting food composition has a CHP of at least 0.03,
e) homogenizing the water phase, the emulsifier and the oil phase,
to result in an oil-in-water-emulsified food composition according to claim 1.

12. Process for manufacturing a composition according to claim 11, wherein dispersing of the cellulose microfibrils, step d, is carried out before step c) or simultaneously with step e).

13. Process for manufacturing a composition according to claim 11 or 12, wherein the process further comprises the step of adding a further hydrocolloid during or before step e), or before step c).

14. Use of from 0.1 to 6 wt% of cellulose microfibrils , wherein the average degree of crystallinity of the cellulose is below 50%, or wherein the cellulose microfibrils are bacterial cellulose microfibrils, to reduce syneresis in an oil-in-water emulsified food composition comprising from 3 to 65 wt% of vegetable oil and an oil-in-water emulsifier, and wherein the oil in water emulsion is free from chemically modified non-emulsifying starch and wherein the composition has a CHP of more than 0.03.

15. Use of from 0.1 to 6 wt% of cellulose microfibrils, wherein the average degree of crystallinity of the cellulose is below 50%, or wherein the cellulose microfibrils are bacterial cellulose microfibrils, to improve the mouthfeel, preferably to reduce sticky or slimy mouthfeel, in an oil-in-water emulsified food composition comprising from 3 to 65 wt% of vegetable oil and an oil-in-water emulsifier, and wherein the oil in water emulsion is free from chemically modified non-emulsifying starch and wherein the composition has a CHP of more than 0.03 and wherein the composition preferably further comprises an additional hydrocolloid next to the cellulose microfibrils.

## Patentansprüche

1. Nahrungsmittelzusammensetzung in Form einer Öl-in-Wasser-Emulsion, umfassend:
• 3 bis 65 Gew.-% Pflanzenöl,
• Öl-in-Wasser-Emulgator,
• 0,1 bis 6 Gew.-% Cellulose-Mikrofibrillen, wobei der durchschnittliche Kristallinitätsgrad der Cellulose unter 50% liegt oder wobei es sich bei den Cellulose-Mikrofibrillen um bakterielle Cellulose-Mikrofibrillen handelt,
wobei die Zusammensetzung frei von chemisch modifizierter, nicht emulgierender Stärke ist,
wobei die Nahrungsmittelzusammensetzung einen Zusammensetzungshomogenitätsparameter (CHP) von mindestens 0,03 aufweist.

2. Nahrungsmittelzusammensetzung nach irgendeinem der vorhergehenden Ansprüche, wobei die Cellulosefasern einen durchschnittlichen Kristallinitätsgrad von weniger als 30% aufweisen.

3. Nahrungsmittelzusammensetzung nach irgendeinem der vorhergehenden Ansprüche, wobei die Cellulose-Mikrofibrillen Citrusfasern sind.

4. Nahrungsmittelzusammensetzung nach irgendeinem der vorhergehenden Ansprüche, wobei die Zusammensetzung ein weiteres Hydrokolloid umfasst, das aus der Gruppe ausgewählt ist, bestehend aus Inulin, Fructooligosacchariden, Galactooligosacchariden, Xylooligosacchariden, Oligoderivaten von Stärke, Schalen, Kleie wie vorzugsweise Senfkleie, Flohsamen, Polysacchariden, physikalisch modifizierter Stärke, nativen Stärken, Polycarbophil, Lignin, **Arabinogalactanen**, Chitosanen, Haferfasern, löslichen Maisfasern, Dextrin, Dextran, Johannisbrotkernmehl, Konjak-Gummi, Derivaten von Johannisbrotkernmehl, Hydroxypropylmethylcellulose (HPMC), Pektin, Gummi, Gelatine, Gellangummi, Xanthangummi, Guargummi, Pektin, Carrageen, Cellulosegummi, Gummi arabicum, pflanzlichen Schleimstoffen oder Mischungen davon.

5. Nahrungsmittelzusammensetzung nach irgendeinem der vorhergehenden Ansprüche, wobei das weitere Hydrokolloid aus der Gruppe der nicht modifizierten Stärke, der physikalisch modifizierten Stärke, des Xanthangummis, des Guargummis, des Guarsamenmehls und der pflanzlichen Schleimstoffe sowie Mischungen davon ausgewählt ist.

6. Nahrungsmittelzusammensetzung nach irgendeinem der vorhergehenden Ansprüche, wobei die Zusammensetzung nicht modifizierte Stärke oder physikalisch modifizierte Stärke in einer Menge von 0,1 bis 15 Gew.-%, vorzugsweise 0,1 bis 5 Gew.-%, bezogen auf das Gewicht der Zusammensetzung, umfasst.

7. Nahrungsmittelzusammensetzung nach Anspruch 4, wobei die nicht modifizierte oder physikalisch modifizierte Stärke unter Kartoffelstärke, Tapiokastärke, Maisstärke und Mischungen davon ausgewählt ist.

8. Nahrungsmittelzusammensetzung nach irgendeinem der vorhergehenden Ansprüche, wobei der Emulgator aus der Gruppe ausgewählt ist, bestehend aus Phospholipid, Molkenprotein, Casein, Algenprotein, Hülsenfruchtprotein, OSA-Stärke und Mischungen davon, vorzugsweise ausgewählt ist aus der Gruppe, bestehend aus Erbsenprotein, Kichererbsenprotein, Linsenprotein, Eigelb und Mischungen davon, und am bevorzugtesten Eigelb ist.

9. Nahrungsmittelzusammensetzung nach irgendeinem der vorhergehenden Ansprüche, wobei die Zusammensetzung 5 bis 50 Gew.-%, vorzugsweise 10 bis 40 Gew.-%, vorzugsweise 10 bis 25 Gew.-% Pflanzenöl enthält.

10. Nahrungsmittelzusammensetzung nach irgendeinem der vorhergehenden Ansprüche, wobei die Zusammensetzung bei 20°C eine Stevens-Konsistenz zwischen 80 und 400 Gramm, vorzugsweise zwischen 100 und 250 Gramm, aufweist.

11. Verfahren zur Herstellung einer emulgierten Nahrungsmittelzusammensetzung vom Typ "Öl-in-Wasser", umfassend:
• eine Wasserphase, die Wasser und Cellulose-Mikrofibrillen umfasst,
• einen Öl-in-Wasser-Emulgator,
• eine Ölphase,
wobei das Verfahren die Schritte umfasst:
a) Bereitstellen einer Wasserphase, die umfasst:
• Wasser,
• 0,1 bis 6 Gew.-%, bezogen auf das Gewicht der resultierenden Nahrungsmittelzusammensetzung, an Cellulose-Mikrofibrillen, wobei der durchschnittliche Kristallinitätsgrad der Cellulose unter 50% liegt oder wobei es sich bei den Cellulose-Mikrofibrillen um bakterielle Cellulose-Mikrofibrillen handelt,
b) Zugeben eines Öl-in-Wasser-Emulgators,
c) Zusammenführen einer Ölphase, die Pflanzenöl enthält, mit der Wasserphase,
d) Dispergieren der Cellulose-Mikrofibrillen in einer Menge, die ausreicht, dass die resultierende Nahrungsmittelzusammensetzung einen CHP-Wert von mindestens 0,03 aufweist,
e) Homogenisieren der Wasserphase, des Emulgators und der Ölphase,
um eine emulgierte Nahrungsmittelzusammensetzung vom Typ "Öl-in-Wasser" nach Anspruch 1 zu erhalten.

12. Verfahren zur Herstellung einer Zusammensetzung nach Anspruch 11, wobei das Dispergieren der Cellulose-Mikrofibrillen, Schritt d), vor Schritt c) oder gleichzeitig mit Schritt e) durchgeführt wird.

13. Verfahren zur Herstellung einer Zusammensetzung nach Anspruch 11 oder 12, wobei das Verfahren ferner den Schritt des Hinzufügens eines weiteren Hydrokolloids während oder vor Schritt e) oder vor Schritt c) umfasst.

14. Verwendung von 0,1 bis 6 Gew.-% Cellulose-Mikrofibrillen, wobei der durchschnittliche Kristallinitätsgrad der Cellulose unter 50% liegt oder wobei es sich bei den Cellulose-Mikrofibrillen um bakterielle Cellulose-Mikrofibrillen handelt, zur Verringerung der Synärese in einer emulgierten Nahrungsmittelzusammensetzung vom Typ "Öl-in-Wasser", die 3 bis 65 Gew.-% Pflanzenöl und einen Öl-in-Wasser-Emulgator enthält, und wobei die Öl-in-Wasser-Emulsion frei von chemisch modifizierter, nicht emulgierender Stärke ist und wobei die Zusammensetzung einen CHP-Wert von mehr als 0,03 aufweist.

15. Verwendung von 0,1 bis 6 Gew.-% Cellulose-Mikrofibrillen, wobei der durchschnittliche Kristallinitätsgrad der Cellulose unter 50% liegt oder wobei es sich bei den Cellulose-Mikrofibrillen um bakterielle Cellulose-Mikrofibrillen handelt, zur Verbesserung des Mundgefühls, vorzugsweise zur Verringerung eines klebrigen oder schleimigen Mundgefühls, in einer emulgierten Nahrungsmittelzusammensetzung vom Typ "Öl-in-Wasser", die 3 bis 65 Gew.-% Pflanzenöl und einen Öl-in-Wasser-Emulgator umfasst, und wobei die Öl-in-Wasser-Emulsion frei von chemisch modifizierter, nicht emulgierender Stärke ist und wobei die Zusammensetzung einen CHP-Wert von mehr als 0,03 aufweist und wobei die Zusammensetzung vorzugsweise zusätzlich zu den Cellulose-Mikrofibrillen ein weiteres Hydrokolloid enthält.

## Revendications

1. Composition alimentaire émulsifiée huile-dans-eau semi-solide comprenant :
• de 3 à 65 % en poids d'huile végétale,
• un émulsifiant huile-dans-eau,
• de 0,1 à 6 % en poids de microfibrilles de cellulose, la cellulose ayant un degré moyen de cristallinité inférieur à 50 %, ou les microfibrilles de cellulose étant des microfibrilles de cellulose bactérienne,
laquelle composition est exempte d'amidon chimiquement modifié non émulsifiant,
laquelle composition alimentaire présente un paramètre d'homogénéité de composition (CHP) d'au moins 0,03.

2. Composition alimentaire selon la revendication précédente, dans laquelle les fibres de cellulose présentent un degré moyen de cristallinité inférieur à 30 %.

3. Composition alimentaire selon l'une quelconque des revendications précédentes, dans laquelle les microfibrilles de cellulose sont des fibres d'agrumes.

4. Composition alimentaire selon l'une quelconque des revendications précédentes, dans laquelle la composition comprend un autre hydrocolloïde choisi dans le groupe constitué par les inuline, fructooligosaccharides, galacto-oligosaccharides, xylooligosaccharides, oligodérivés d'amidon, enveloppes, sons tels que de préférence son de moutarde, psyllium, polysaccharides, amidon physiquement modifié, amidons natifs, polycarbophile, lignine, arabinogalactanes, chitosanes, fibres d'avoine, fibres de maïs solubles, dextrine, dextrane, gomme de caroube, gomme de konjac, dérivés de gomme de caroube, hydroxypropylméthylcellulose (HPMC), pectine, gommes, gélatine, gomme gellane, gomme xanthane, gomme guar, pectine, carraghénane, gomme de cellulose, gomme arabique, mucilage végétal ou mélanges de ceux-ci.

5. Composition alimentaire selon l'une quelconque des revendications précédentes, dans laquelle l'autre hydrocolloïde est choisi dans le groupe constitué par les amidon non modifié, amidon physiquement modifié, gomme xanthane, gomme guar, farine de graines de guar, et mucilage végétal et mélanges de ceux-ci.

6. Composition alimentaire selon l'une quelconque des revendications précédentes, dans laquelle la composition comprend de l'amidon non modifié ou de l'amidon physiquement modifié en une quantité de 0,1 à 15 % en poids, de préférence de 0,1 à 5 % en poids, par rapport au poids de la composition.

7. Composition alimentaire selon la revendication 4, dans laquelle l'amidon non modifié ou physiquement modifié est choisi parmi l'amidon de pomme de terre, l'amidon de tapioca, l'amidon de maïs et leurs mélanges.

8. Composition alimentaire selon l'une quelconque des revendications précédentes, dans laquelle l'émulsifiant est choisi dans le groupe constitué par les phospholipide, protéine de lactosérum, caséine, protéine d'algue, protéine de légumineuse, amidon OSA et leurs mélanges, de préférence est choisi dans le groupe constitué par les protéine de pois, protéine de pois chiche, protéine de lentille, jaune d'œuf et leurs mélanges et, de façon particulièrement préférée, est du jaune d'œuf.

9. Composition alimentaire selon l'une quelconque des revendications précédentes, laquelle composition comprend de 5 à 50 % en poids, de préférence de 10 à 40 % en poids, de préférence de 10 à 25 % en poids d'huile végétale.

10. Composition alimentaire selon l'une quelconque des revendications précédentes, laquelle composition présente une consistance Stevens à 20 °C comprise entre 80 et 400 grammes, de préférence entre 100 et 250 grammes.

11. Procédé de fabrication d'une composition alimentaire émulsifiée huile-dans-eau comprenant :
• une phase aqueuse comprenant de l'eau et des microfibrilles de cellulose,
• un émulsifiant huile-dans-eau,
• une phase huileuse,
le procédé comprenant les étapes suivantes :
a) fourniture d'une phase aqueuse comprenant :
• de l'eau,
• de 0,1 à 6 % en poids, basé sur le poids de la composition alimentaire résultante, de microfibrilles de cellulose, le degré moyen de cristallinité de la cellulose étant inférieur à 50 %, ou les microfibrilles de cellulose étant des microfibrilles de cellulose bactérienne,
b) ajout d'un émulsifiant huile-dans-eau,
c) combinaison d'une phase huileuse comprenant de l'huile végétale avec la phase aqueuse,
d) dispersion des microfibrilles de cellulose de manière suffisante pour que la composition alimentaire résultante présente un CHP d'au moins 0,03,
e) homogénéisation de la phase aqueuse, de l'émulsifiant et de la phase huileuse, pour donner une composition alimentaire émulsifiée huile-dans-eau selon la revendication 1.

12. Procédé de fabrication d'une composition selon la revendication 11, dans lequel la dispersion des microfibrilles de cellulose, étape d, est réalisée avant l'étape c) ou simultanément avec l'étape e).

13. Procédé de fabrication d'une composition selon la revendication 11 ou 12, lequel procédé comprend en outre l'étape d'ajout d'un autre hydrocolloïde pendant ou avant l'étape e), ou avant l'étape c).

14. Utilisation de 0,1 à 6 % en poids de microfibrilles de cellulose, dans laquelle la cellulose a un degré moyen de cristallinité inférieur à 50 %, ou dans laquelle les microfibrilles de cellulose sont des microfibrilles de cellulose bactérienne, pour réduire la synérèse dans une composition alimentaire émulsifiée huile-dans-eau comprenant de 3 à 65 % en poids d'huile végétale et un émulsifiant huile-dans-eau, et dans laquelle l'émulsion huile-dans-eau est exempte d'amidon chimiquement modifié non émulsifiant et dans laquelle la composition présente un CHP supérieur à 0,03.

15. Utilisation de 0,1 à 6 % en poids de microfibrilles de cellulose, dans laquelle la cristallinité moyenne de la cellulose est inférieure à 50 %, ou dans laquelle les microfibrilles de cellulose sont des microfibrilles de cellulose bactérienne, pour améliorer la sensation en bouche, de préférence pour réduire la sensation collante ou visqueuse en bouche, dans une composition alimentaire émulsifiée huile-dans-eau comprenant de 3 à 65 % en poids d'huile végétale et un émulsifiant huile-dans-eau, et dans laquelle l'émulsion huile-dans-eau est exempte d'amidon non émulsifiant chimiquement modifié et dans laquelle la composition présente un CHP supérieur à 0,03 et dans laquelle la composition comprend de préférence en outre un hydrocolloïde supplémentaire en plus des microfibrilles de cellulose.
